# EUROPÄISCHE PATENTANMELDUNG

(11) **EP 0 788 208 A2**
(43) Veröffentlichungstag der Anmeldung: **06.08.1997**
(21) Anmeldenummer: 97810022.0
(22) Anmeldetag: 17.01.1997
(51) Int. Cl.: H02G 5/06

(54) **Sammelschienensystem**

(30) Priorität: 30.01.1996 DE 19603215
(71) Anmelder: ASEA BROWN BOVERI AG, 5400 Baden (CH)
(72) Erfinder: Kostovic, Jadran, 5432 Neuenhof (CH)
(74) Vertreter: Kaiser, Helmut, Dr.

(57) **Zusammenfassung**

Das Sammelschienensystem ist mindestens zwei entlang einer Achse (1) erstreckten, durch Isolierkörper positionierten Phasenleitern (3, 4, 5) versehen.

Es soll ein mehrphasiges Sammelschienensystem angegeben werden, welches besonders einfach und platzsparend aufgebaut ist. Dies wird dadurch erreicht, dass die Phasenleiter (3,4,5) konzentrisch zu der zentral angeordneten Achse (1) angeordnet sind, dass die Phasenleiter (3,4,5) von einer Kapselung (6) konzentrisch umgeben sind, und dass die Isolierkörper zwischen den Phasenleitern (3,4,5) und zwischen dem äussersten Phasenleiter (5) und der Kapselung (6) angeordnet sind.

## Beschreibung

### TECHNISCHES GEBIET

Bei der Erfindung wird ausgegangen von einem Sammelschienensystem gemäss dem Oberbegriff des Anspruchs 1.

### STAND DER TECHNIK

Eine gasisolierte Leitung ist beispielsweise in der Patentschrift US-A-4,705,914 beschrieben. Diese gasisolierte Leitung ist als flexibles Kabel ausgebildet und weist einen gasdichten, zylindersymmetrischen Mantel aus einem Metall mit einem darauf aufgebrachtem Isolierstoffüberzug auf. Dieser Mantel ist mit einem Isoliergas, wie etwa SF₆, von vergleichsweise geringem Druck gefüllt. Zentral im Mantel geführt ist ein hochspannungsbeaufschlagter Stromleiter angeordnet. Der Stromleiter wird durch einen Stützisolator im Kabelmantel fixiert. Der Stützisolator wird von mehreren axial erstreckten, rohrförmigen Isolierkörpern gebildet, die um den Stromleiter verteilt angeordnet sind. Die Stützisolatoren weisen jeweils trapezförmigen Querschnitt auf und sind mit den kleineren Trapezseiten jeweils auf dem Stromleiter und mit den grösseren Trapezseiten jeweils auf der Innenseite des Kabelmantels gelagert. In Umfangsrichtung benachbarte Isolierkörper stützen sich gegeneinander mit ihren von den Trapezschenkeln gebildeten Seiten ab. Eine derartig ausgebildete gasisolierte Leitung zeichnet sich vor allem dadurch aus, dass jeder Stromleiter separat gekapselt ist. Werden drei derartige Leiter zu einem dreiphasigen Sammelschienensystem verbunden, so können keine dreiphasigen Kurzschlüsse auftreten, allerdings ist der Platzbedarf für ein derartiges Sammelschienensystem, bei dem drei separate Leiter verwendet werden, vergleichsweise gross. Zudem müssen die elektrisch isolierenden Abstützungen für die Leiter kurzschlussfest ausgebildet sein, da im Falle des Auftretens eines Kurzschlusses in dem Bereich der Hochspannungsanlage, der ausserhalb der metallgekapselten gasisolierten Teile der Hochspannungsanlage liegt, der volle Kurzschlussstrom durch die Leiter fliesst.

### KURZE DARSTELLUNG DER ERFINDUNG

Der Erfindung, wie sie im Patentanspruch 1 definiert ist, liegt die Aufgabe zugrunde, ein mehrphasiges Sammelschienensystem anzugeben, welches besonders einfach und platzsparend aufgebaut ist.

Ausserhalb des erfindungsgemässen Sammelschienensystems treten keine elektromagnetischen, von den in den Phasenleitern fliessenden Strömen erzeugte Felder auf. Um diesen Effekt zu erreichen, sind keine aufwendigen metallischen Abschirmungen nötig. Zudem sind bei diesem Sammelschienensystem die von Kurzschlussströmen herrührenden elektrodynamischen Kräfte kompensiert, sodass die verwendeten Isolatoren, insbesondere die Spiralisolatoren nur für vergleichsweise kleine Kräfte auszulegen sind. Besonders vorteilhaft ist es, dass bei diesem Sammelschienensystem Kurzschlusslichtbögen die Kapselung nicht durchbrennen können, sodass das Bedienungspersonal nicht durch Lichtbogeneinwirkungen gefährdet ist.

Ein Ausführungsbeispiel der Erfindung und die damit erzielbaren Vorteile wird nachfolgend anhand der Zeichnung, welche lediglich einen möglichen Ausführungsweg darstellt, näher erläutert.

### KURZE BESCHREIBUNG DER ZEICHNUNG

Es zeigen:
Fig.1 einen ersten Teilschnitt entlang einer zentralen Achse durch eine erste Ausführungsform eines erfindungsgemässen Sammelschienensystems,
Fig.2 einen Schnitt durch das erfindungsgemässe Sammelschienensystem senkrecht zur zentralen Achse,
Fig.3 einen zweiten Teilschnitt entlang der zentralen Achse durch das erfindungsgemässe Sammelschienensystem,
Fig.4 einen Schnitt durch eine erste Ausführungsform einer Leiterverbindung des Sammelschienensystems,
Fig.5 einen Schnitt durch eine zweite Ausführungsform einer Leiterverbindung,
Fig.6 einen Teilschnitt entlang einer zentralen Achse durch eine zweite Ausführungsform eines erfindungsgemässen Sammelschienensystems,
Fig.7 einen Teilschnitt entlang einer zentralen Achse durch eine dritte Ausführungsform eines erfindungsgemässen Sammelschienensystems,
Fig.8 einen Teilschnitt durch das Sammelschienensystem gemäss Fig.6, und
Fig.9 einen Schnitt durch eine Verdrillungsstelle des erfindungsgemässen Sammelschienensystems.

Bei allen Figuren sind gleich wirkende Elemente mit gleichen Bezugszeichen versehen. Alle für das unmittelbare Verständnis der Erfindung nicht erforderlichen Elemente sind nicht dargestellt.

### WEGE ZUR AUSFÜHRUNG DER ERFINDUNG

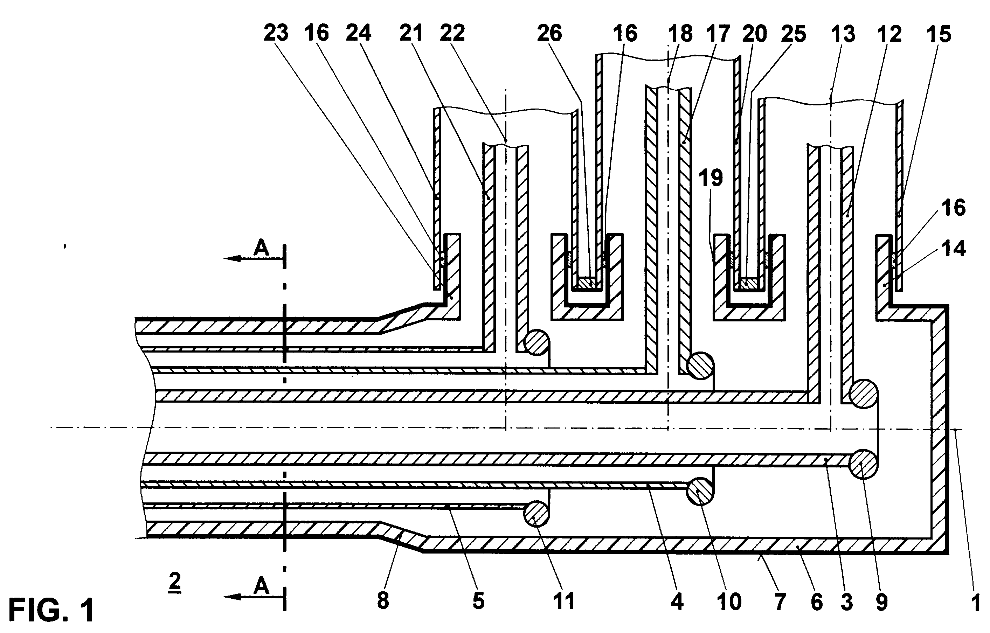

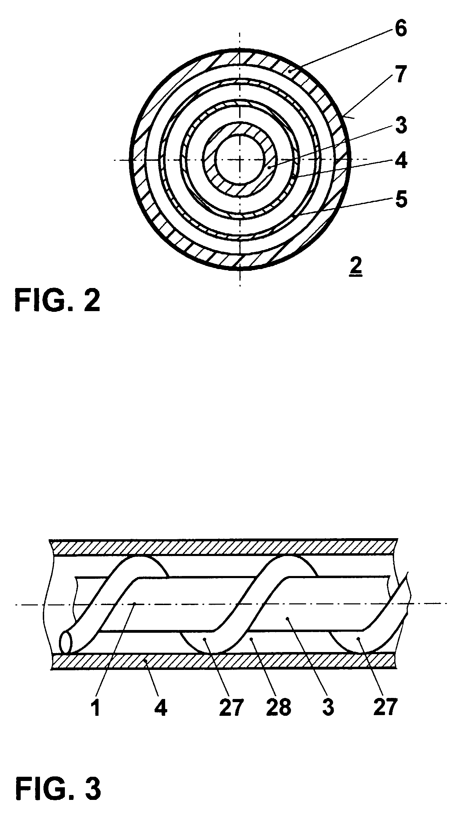

Die Fig.1 zeigt einen ersten Teilschnitt durch ein entlang einer zentralen Achse 1 erstrecktes, beispielsweise dreiphasiges Sammelschienensystem 2. Bei diesem Sammelschienensystem 1 sind die drei sich axial erstreckenden Phasenleiter 3,4 und 5 zylindrisch ausgebildet und konzentrisch zu der zentralen Achse 1 angeordnet. Die Phasenleiter 3,4 und 5 sind beispielsweise aus einer Aluminiumlegierung gefertigt. Die Querschnitte der Phasenleiter 3,4 und 5 sind so ausgelegt, dass jeder dieser Leiter die gleiche Stromtragfähigkeit aufweist. Sie können aber auch aus supraleitenden Materialien hergestellt werden, da sich diese konzentrische Anordnung der Phasenleiter 3,4 und 5 besonders eignet für ein supraleitendes Sammelschienensystem 2. Der innerste Phasenleiter 3 ist der Phase R zugeordnet, der mittlere Phasenleiter 4 der Phase S und der äussere Phasenleiter 5 der Phase T. Das Sammelschienensystem 2 wird von einer zylindrisch ausgebildeten und konzentrisch zu der zentralen Achse 1 und den Phasenleitern 3,4 und 5 angeordneten Kapselung 6 druckdicht umschlossen. Die Kapselung 6 besteht aus einem Isoliermaterial, welches aussen mit einer durchgehenden, elektrisch leitenden Schicht 7 versehen ist. Diese elektrisch leitende Schicht 7 besteht in der Regel aus einem Metall, es ist jedoch möglich, diese Schicht 7 auch aus einem halbleitenden Material herzustellen. Die elektrisch leitende Schicht 7 ist in der Regel geerdet. Das gesamte Volumen innerhalb der Kapselung 6 ist mit einem isolierenden Gas, in der Regel SF₆-Gas unter Druck, gefüllt. Die Phasenleiter 3,4 und 5 sind untereinander und von der Kapselung 6 mittels isolierender Elemente distanziert, diese Elemente sind in Fig.1 der besseren Anschaulichkeit halber nicht dargestellt. Als isolierende Elemente können ringförmig ausgebildete Stützisolatoren oder beispielsweise spiralig gewundene Isolatoren, wie in Fig.3 dargestellt, eingesetzt werden.

Das Sammelschienensystem 2 dient dem Transport von elektrischer Energie über grössere Entfernungen. Der konzentrische Aufbau muss jedoch beim Eintritt des Sammelschienensystems 2 in eine Schaltanlage aufgehoben werden. Eine mögliche Ausführung des Übergangs vom konzentrisch aufgebauten Sammelschienensystem 2 in eine metallgekapselte gasisolierte Schaltanlage ist in der Fig.1 ebenfalls schematisch dargestellt. Im Bereich dieses Übergangs weist die Kapselung 6 eine Aufweitung 8 auf. Innerhalb dieser Aufweitung 8 enden die Phasenleiter 3,4 und 5 und sind an ihren Enden jeweils mit einem dielektrisch wirksamen Abschirmring 9,10 und 11 versehen. Dabei ist der Abschirmring 9 mit dem Phasenleiter 3 verbunden, der Abschirmring 10 mit dem Phasenleiter 4 und der Abschirmring 11 mit dem Phasenleiter 5.

Rechtwinklig zur zentralen Achse 1 ist an den Phasenleiter 3 ein rohrförmig ausgebildeter Leiter 12 angeschweisst oder angeschraubt. Der Leiter 12 erstreckt sich entlang einer Achse 13. Dort, wo der Leiter 12 aus der Kapselung 6 austritt, ist an die Kapselung 6 ein Stutzen 14 angeformt, welcher den Leiter 12 konzentrisch umgibt, und welcher sich in Richtung von der zentralen Achse 1 weg erstreckt. Der Leiter 12 ist im Bereich des Stutzens 14 mit einem nicht dargestellten, spiralig gewundenen Isolator gegen den Stutzen 14 abgestützt. Es sind jedoch auch andere Isolatorausführungen möglich. Den Stutzen 14 umgibt konzentrisch eine Metallkapselung 15. In dem ringförmigen Spalt zwischen der Metallkapselung 15 und der Aussenwand des Stutzens 14 ist ein Dichtungselement 16 vorgesehen, welches diesen Spalt druckdicht abschliesst und welches zugleich den Stutzen 14 mechanisch führt. Das Dichtungselement 16 erlaubt Wärmedehnungen des Stutzens 14 und der Metallkapselung 15 in axialer und in radialer Richtung.

Rechtwinklig zur zentralen Achse 1 ist an den Phasenleiter 4 ein rohrförmig ausgebildeter Leiter 17 angeschweisst oder angeschraubt. Der Leiter 17 erstreckt sich entlang einer Achse 18. Dort, wo der Leiter 17 aus der Kapselung 6 austritt, ist an die Kapselung 6 ein Stutzen 19 angeformt, welcher den Leiter 17 konzentrisch umgibt, und welcher sich in Richtung von der zentralen Achse 1 weg erstreckt. Der Leiter 17 ist im Bereich des Stutzens 17 mit einem nicht dargestellten, spiralig gewundenen Isolator gegen den Stutzen 17 abgestützt. Es sind jedoch auch andere Isolatorausführungen möglich. Den Stutzen 19 umgibt konzentrisch eine Metallkapselung 20. In dem ringförmigen Spalt zwischen der Metallkapselung 20 und der Aussenwand des Stutzens 19 ist ein Dichtungselement 16 vorgesehen, welches diesen Spalt druckdicht abschliesst und welches zugleich den Stutzen 19 mechanisch führt. Das Dichtungselement 16 erlaubt Wärmedehnungen des Stutzens 19 und der Metallkapselung 20 in axialer und in radialer Richtung.

Rechtwinklig zur zentralen Achse 1 ist an den Phasenleiter 5 ein rohrförmig ausgebildeter Leiter 21 angeschweisst oder angeschraubt. Der Leiter 21 erstreckt sich entlang einer Achse 22. Dort, wo der Leiter 21 aus der Kapselung 6 austritt, ist an die Kapselung 6 ein Stutzen 23 angeformt, welcher den Leiter 21 konzentrisch umgibt, und welcher sich in Richtung von der zentralen Achse 1 weg erstreckt. Der Leiter 21 ist im Bereich des Stutzens 23 mit einem nicht dargestellten, spiralig gewundenen Isolator gegen den Stutzen 23 abgestützt. Es sind jedoch auch andere Isolatorausführungen möglich. Den Stutzen 23 umgibt konzentrisch eine Metallkapselung 24. In dem ringförmigen Spalt zwischen der Metallkapselung 24 und der Aussenwand des Stutzens 23 ist ein Dichtungselement 16 vorgesehen, welches diesen Spalt druckdicht abschliesst und welches zugleich den Stutzen 23 mechanisch führt. Das Dichtungselement 16 erlaubt Wärmedehnungen des Stutzens 23 und der Metallkapselung 24 in axialer und in radialer Richtung.

Die Achsen 13,18 und 22 liegen hier beispielsweise in einer Ebene mit der zentralen Achse 1, es sind jedoch auch andere räumliche Konfigurationen vorstellbar. Die Metallkapselungen 15,20 und 24 sind an ihren der zentralen Achse 1 zugewandten Enden mittels eingeschweissten oder verschraubten elektrisch leitenden Stegen 25 und 26 verbunden. Die Stege 25 und 26 bilden einen Sternpunkt für die in den Metallkapselungen 15,20 und 24 fliessenden Ausgleichsströme. Ein gleichartiger Sternpunkt ist an den nicht dargestellten gegenüberliegenden Enden der Metallkapselungen 15,20 und 24 vorgesehen. Wenigstens einer der beiden Sternpunkte ist mit der Erde verbunden, um im Fehlerfall mögliche Potentialanhebungen der Metallkapselungen 15, 20 und 24 sicher zu vermeiden. Die Metallkapselungen 15,20 und 24 sind ebenfalls mit SF₆-Gas unter Druck gefüllt, wobei das Innere der Metallkapselungen 15,20 und 24, zumindest deren erste Abschnitte bis zum jeweils ersten Schottungsisolator, über die Stutzen 14,19 und 23 mit dem von der Kapselung 6 eingeschlossenen Volumen des Sammelschienensystems 2 verbunden sind. Das Sammelschienensystem 2 kann ebenfalls in mehrere Gasräume unterteilt sein. Die Leiter 12,17 und 21 werden in der zugehörigen Metallkapselung 15,20 und 24 entweder mittels herkömmlichen Stützisolatoren oder ebenfalls mit spiralig gewundenen Isolatoren positioniert.

Die Fig.2 zeigt den in der Fig.1 angedeuteten Schnitt A-A durch das erfindungsgemässe Sammelschienensystem 2 senkrecht zur zentralen Achse 1. Die jeweiligen Abstände zwischen den konzentrisch angeordneten Phasenleitern 3,4 und 5 sind so ausgelegt, dass in den mit SF₆-Gas unter Druck gefüllten Zwischenräumen jeweils etwa die gleichen Feldstärken herrschen. Die Phasenleiter 3,4 und 5 werden in bestimmten Baulängen gefertigt, und diese vorgefertigten Stücke werden dann mittels Verbindungselementen zur jeweiligen Sammelschiene zusammengefügt. Die Phasenleiter 3,4 und 5 können auch in Richtung der zentralen Achse 1 sich erstreckende Schlitze aufweisen, welche das Spülen aller Hohlräume innerhalb des Sammelschienensystems 2 mit SF₆-Gas erleichtern. Das durchtretende SF₆-Gas kann auf diese Art zuverlässig getrocknet werden, sodass keine Feuchtigkeitsansammlungen innerhalb des Sammelschienensystems 2 zu befürchten sind.

Die Fig.3 zeigt einen Teilschnitt längs der zentralen Achse 1 durch das erfindungsgemässe Sammelschienensystem. Der Phasenleiter 3 ist von einem Spiralisolator 27 umgeben. Der Spiralisolator 27 besteht aus einem vorgefertigten, spiralenförmig mit gleichbleibender Steigung gewundenen Profilstück aus isolierendem Material. Der Spiralisolator 27 kann aus einzelnen Spiralenstücken bestehen, er muss sich nicht über die gesamte Länge des Sammelschienensystems 2 erstrecken. Der Spiralisolator 27 weist beispielsweise einen kreisförmigen oder einen ellipsenförmigen Querschnitt auf, es sind jedoch auch andere Profile vorstellbar, insbesondere Hohlprofile und auch volle Profile. Zwischen dem Phasenleiter 3 und dem Phasenleiter 4 ist ein definierter Zwischenraum 28 vorgesehen, der mit Hochspannung beaufschlagt ist. Der Spiralisolator 27 sorgt dafür, dass die beiden Phasenleiter 3 und 4 sicher voneinander distanziert werden, sodass keine Phasenüberschläge auftreten können. Der Phasenleiter 4 ist ebenfalls von einem in der Fig.3 nicht dargestellten Spiralisolator umgeben, welcher für die Distanzierung des Phasenleiters 4 vom Phasenleiter 5 vorgesehen ist. Der Phasenleiter 5 ist ebenfalls von einem Spiralisolator umgeben, welcher für die Distanzierung des Phasenleiters 5 von der Kapselung 6 vorgesehen ist.

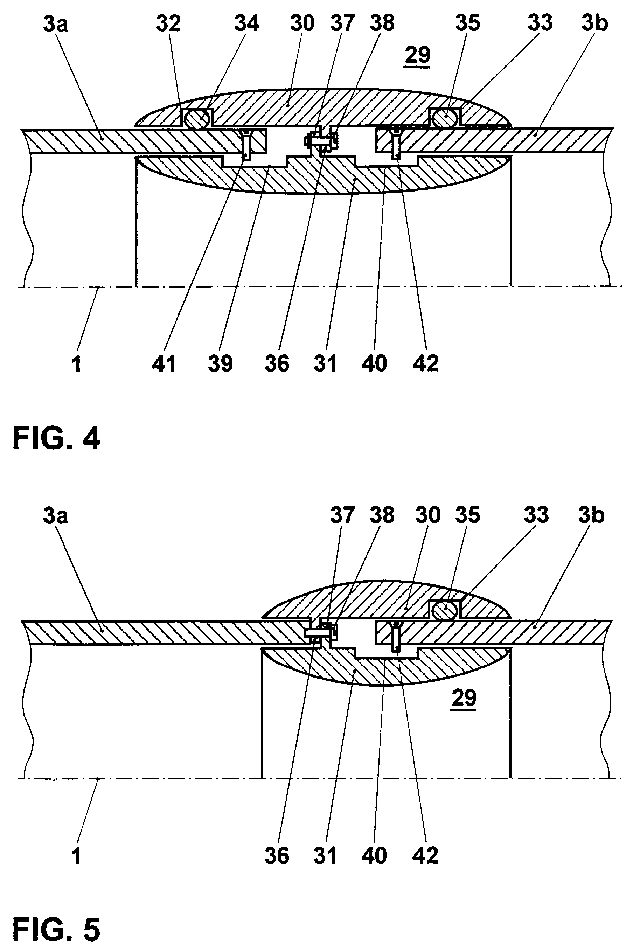

Die Fig.4 zeigt einen Schnitt durch eine erste Ausführungsform einer Leiterverbindung 29, welche Enden 3a,3b von Teilstücken des rohrförmig ausgebildeten Phasenleiters 3 elektrisch leitend miteinander verbindet. Die Leiterverbindung 29 weist einen Aussenring 30 und einen Innenring 31 auf, die konzentrisch zueinander angeordnet sind. Die Enden 3a,3b werden durch den Aussenring 30 und den Innenring 31 umfasst. Der Aussenring 30 weist zwei Nuten 32,33 auf der dem Innenring 31 zugewandten Seite auf. In die Nut 32 ist ein Spiralkontakt 34 eingelegt, der sich auf das Ende 3a des Phasenleiters 3 abstützt. In die Nut 33 ist ein Spiralkontakt 35 eingelegt, der sich auf das Ende 3b des Phasenleiters 3 abstützt. Der Aussenring 30 ist auf der dem Innenring 31 zugewandten Seite mit einem Bund 36 versehen, der in den Raum zwischen den Stirnseiten der Enden 3a,3b hineinragt. Der Innenring 31 ist auf der dem Aussenring 30 zugewandten Seite mit einem Bund 37 versehen, der in den Raum zwischen den Stirnseiten der Enden 3a,3b hineinragt. Der Bund 36 ist mittels Schraubverbindungen, die durch eine Schraube 38 symbolisiert werden, mit dem Bund 37 verbunden. In die dem Aussenring 30 zugewandten Seite des Innenrings 31 sind zwei Nuten 39,40 eingelassen. In die Nut 39 greift mindestens eine Schraube 41 ein, die mit dem Ende 3a verschraubt ist, wodurch verhindert wird, dass die Leiterverbindung 29 vom Ende 3a abrutschen kann. In die Nut 40 greift mindestens eine Schraube 42 ein, die mit dem Ende 3b verschraubt ist, wodurch verhindert wird, dass die Leiterverbindung 29 vom Ende 3b abrutschen kann. Die Schrauben 41 und 42 haben in den Nuten 39 und 40 Spiel, sodass Wärmedehnungen des Phasenleiters 3 in axialer Richtung ausgeglichen werden können.

Die Fig.5 zeigt einen Schnitt durch eine zweite Ausführungsform einer Leiterverbindung 29. Bei dieser, gegenüber der Fig.4 vereinfachten Ausführungsform, sind die beiden Bunde 36 und 37 miteinander und zugleich mit der Stirnseite des Endes 3a fest verschraubt. Für diese als Stromübergang ausgebildete Verschraubung ist eine Vielzahl von Schrauben 38 vorgesehen. Der Aussenring 30 ist nur mit einer Nut 33 und einem in diese eingelegten Spiralkontakt 35 für die Stromführung versehen. Der Innenring 31 ist hier nur mit einer Nut 40 versehen, in welche mindestens eine mit dem Ende 3b verbundene Schraube 42 eingreift. Die mindestens eine Schraube 42 hat in der Nut 40 Spiel, sodass Wärmedehnungen des Phasenleiters 3 in axialer Richtung ausgeglichen werden können.

Die Leiterverbindungen 29 werden im Sammelschienensystem 2 von Phase zu Phase versetzt angeordnet, um die Spannungsabstände zwischen den Phasenleitern 3,4 und 5 möglichst klein ausbilden zu können. Ferner wird darauf geachtet, dass im Bereich der jeweiligen Leiterverbindung 29 keine Spiralisolatoren 27 vorgesehen werden. Die Leiterverbindungen 29 erlauben den Durchtritt von SF₆-Gas, sodass dieses Gas ungehindert in alle Bereiche des Sammelschienensystems 2 gelangt.

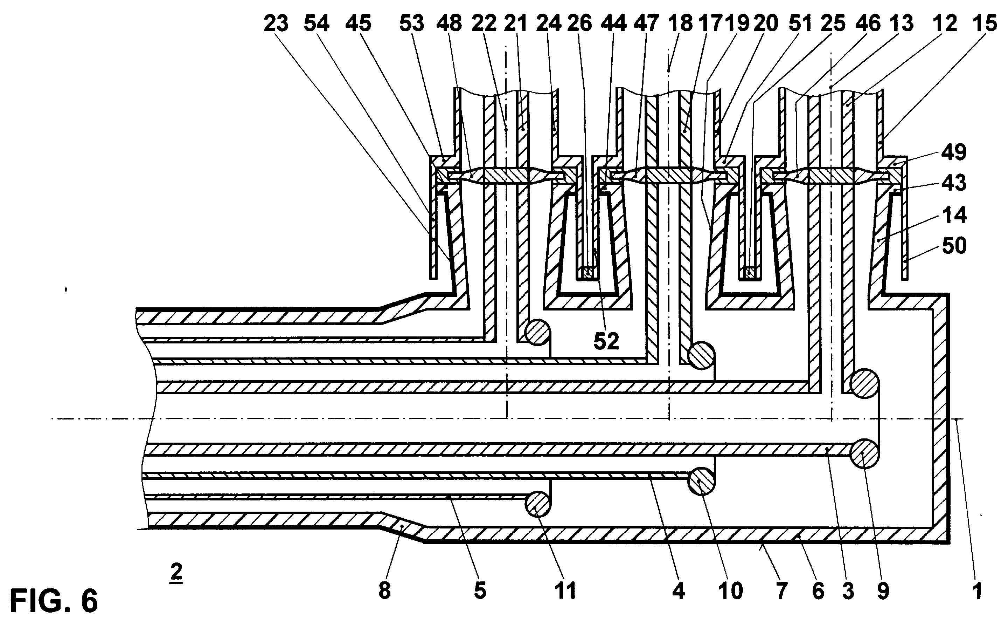

Eine zweite mögliche, ähnlich der in Fig.1 gezeigten, Ausführungsform des Übergangs vom konzentrisch aufgebauten Sammelschienensystem 2 in eine metallgekapselte gasisolierte Schaltanlage ist in der Fig.6 schematisch dargestellt. Die Stutzen 14,19 und 24 weiten sich bei dieser Ausführungsform in der von der zentralen Achse 1 abgewandten Richtung konisch auf. Am Ende des Stutzens 14 ist ein Anschlussflansch 43 angeformt, am Ende des Stutzens 19 ist ein Anschlussflansch 44 angeformt und am Ende des Stutzens 24 ist ein Anschlussflansch 45 angeformt. Jeder dieser Anschlussflansche 43,44 und 45 ist druckdicht mit einem schematisch dargestellten Schottungsisolator 46,47 und 48 verbunden. Diese Schottungsisolatoren 46 schliessen das Gasvolumen im Innern des Sammelschienensystems 2 von den Gasvolumina in den drei einphasig metallgekapselten Phasen der metallgekapselten gasisolierten Schaltanlage ab. Die Metallkapselung 15 ist mit einem Anschlussflansch 49 versehen, von dem ein den Stutzen 14 abschirmendes metallisches Rohr 50 ausgeht. Die Metallkapselung 20 ist mit einem Anschlussflansch 51 versehen, von dem ein den Stutzen 19 abschirmendes metallisches Rohr 52 ausgeht. Die Metallkapselung 24 ist mit einem Anschlussflansch 53 versehen, von dem ein den Stutzen 23 abschirmendes metallisches Rohr 54 ausgeht. Zwischen dem Anschlussflansch 43 und dem Anschlussflansch 49 ist der Schottungsisolator 46 druckdicht eingespannt. Zwischen dem Anschlussflansch 44 und dem Anschlussflansch 51 ist der Schottungsisolator 47 druckdicht eingespannt. Zwischen dem Anschlussflansch 45 und dem Anschlussflansch 53 ist der Schottungsisolator 48 druckdicht eingespannt. Die Schottungsisolatoren 46,47 und 48 trennen die unterschiedlichen Gasvolumina druckdicht voneinander ab. Bei dieser Ausführung sind die Rohre 50,52 und 54 und über sie die Metallkapselungen 15,20 und 24 ebenfalls mittels eingeschweisster oder verschraubter Stege 25 und 26 zu einem Sternpunkt verbunden, welcher in der Regel mit der Erde verbunden ist.

Die Achsen 13,18 und 22 sind hier in einer Ebene mit der zentralen Achse 1 angeordnet, es sind jedoch eine Vielzahl anderer räumlicher Anordnungen vorstellbar, insbesondere wenn eine Anpassung der Übergangsanordnung an vorgegebene Abmessungen des sie umgebenden Bauwerks vorzunehmen ist. Ein Übergang von dem Sammelschienensystem 2 in eine dreiphasig metallgekapselte gasisolierte Schaltanlage ist ebenfalls sehr einfach mit Hilfe eines entsprechend ausgebildeten Übergangsgehäuses möglich.

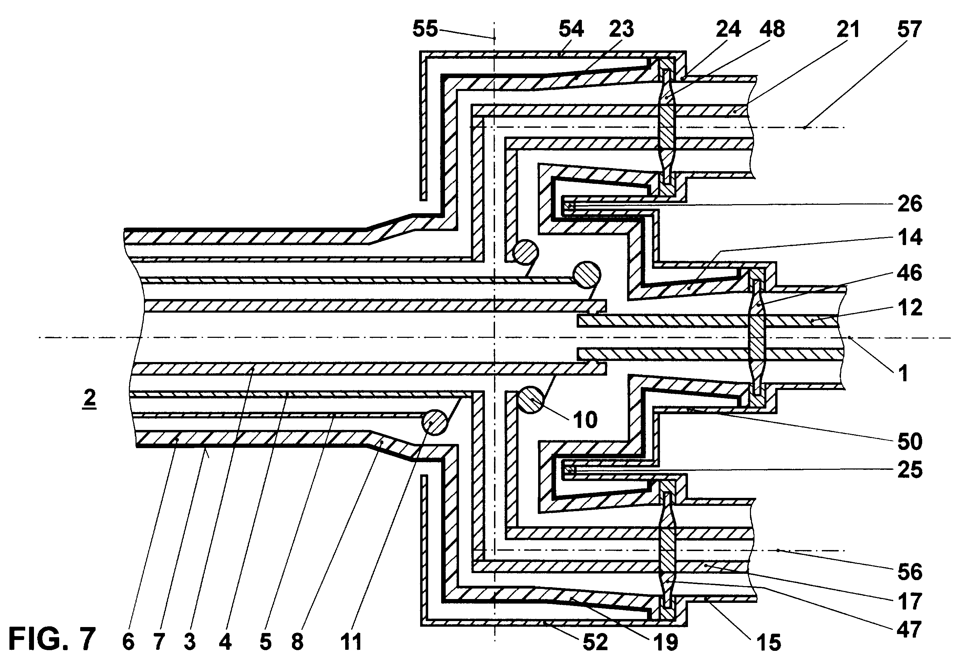

Die Fig.7 zeigt einen Teilschnitt entlang einer zentralen Achse 1 durch eine dritte Ausführungsform eines erfindungsgemässen Sammelschienensystems 2. Hier ist eine weitere mögliche Ausführungsform des Übergangs vom konzentrisch aufgebauten Sammelschienensystem 2 in eine einphasig metallgekapselte gasisolierte Schaltanlage schematisch dargestellt. Bei dieser Ausführungsform erstreckt sich der innerste Phasenleiter 3 entlang der zentralen Achse 1 weiter. Der Leiter 12 der metallgekapselten gasisolierten Schaltanlage ist in den Phasenleiter 3 eingeschoben und mit diesem elektrisch leitend kontaktiert. An das Ende des Phasenleiters 4 ist, rechtwinklig zur zentralen Achse 1, entlang einer Achse 55 erstreckt, ein rohrförmig ausgebildeter Leiter 17 angeschweisst oder angeschraubt. Der Leiter 17 wird dann abgewinkelt, vorzugsweise rechtwinklig, und wird, entlang einer Achse 56 erstreckt, konzentrisch zu dieser Achse 56 weitergeführt. Die Achse 56 verläuft parallel zur zentralen Achse 1. An das Ende des Phasenleiters 5 ist, rechtwinklig zur zentralen Achse 1, entlang der Achse 55 erstreckt, ein rohrförmig ausgebildeter Leiter 21 angeschweisst oder angeschraubt. Der Leiter 21 wird dann abgewinkelt, vorzugsweise rechtwinklig, und wird, entlang einer Achse 57 erstreckt, und konzentrisch zu dieser weitergeführt. Die Achse 57 verläuft parallel zur zentralen Achse 1. Hier sind die Achsen 55,56 und 57 in einer Ebene mit der zentralen Achse 1 dargestellt, dabei ist es jedoch durchaus vorstellbar, dass die Achsen 56 und 57 zwar parallel zur zentralen Achse 1 verlaufen, dass eine von diesen jedoch nicht in der gleichen Ebene liegt, wie die anderen beiden Achsen. Die Achse 55 müsste in diesem Fall für die nicht in der gemeinsamen Ebene liegende Phase durch eine rechtwinklig zur zentralen Achse 1 entsprechend schräg aus dieser Ebene heraus verlaufende Achse ergänzt werden.

Die eigentliche Übergangszone mit den konusförmigen Stutzen 14,19 und 23 und den Schottungsisolatoren 46,47 und 48 ist in der Fig.7 gleich ausgebildet wie in Fig.6, und braucht hier deshalb nicht näher beschrieben zu werden. Bei dieser Ausführung sind die Rohre 50,52 und 54 ebenfalls mittels eingeschweisster oder verschraubter Stege 25 und 26 zu einem Sternpunkt verbunden, welcher in der Regel mit der Erde verbunden ist.

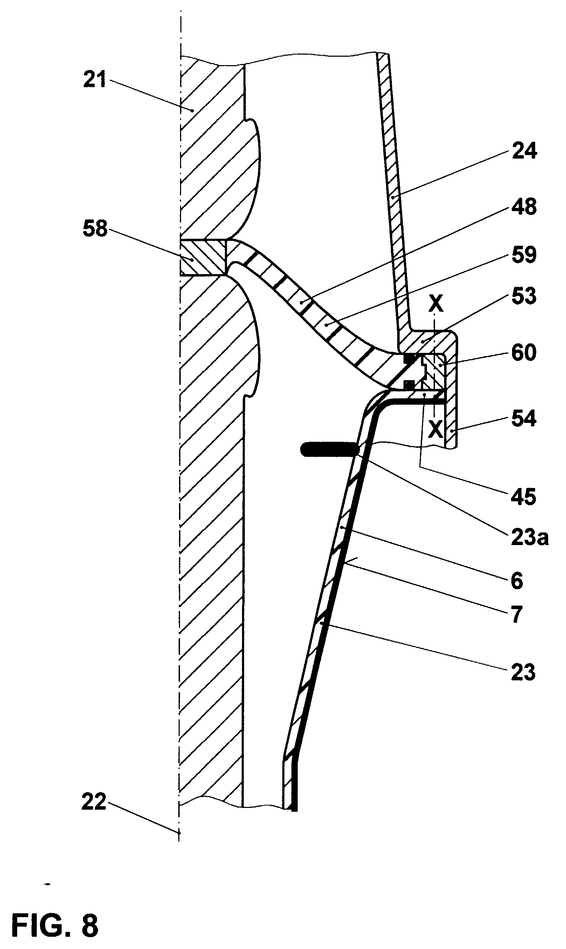

Die Fig.8 zeigt einen Teilschnitt durch das Sammelschienensystem gemäss Fig.6 bzw. Fig.7, und zwar ist die Übergangszone einer Phase im Bereich um den Schottungsisolator 48 etwas detaillierter dargestellt. Der Leiter 21 ist hier als massiver Leiter dargestellt, der eine dielektrisch besonders günstig ausgebildete Oberfläche im Bereich um den Einbauort des Schottungsisolators 48 aufweist. Der Leiter 21 ist elektrisch leitend mit der metallischen Eingussarmatur 58 des Schottungsisolators 48 verbunden. Die Eingussarmatur 58 trägt den Isolatorkörper 59 des Schottungsisolators 48. Der Isolatorkörper 59 wird zwischen den beiden Anschlussflanschen 45 und 53 gehalten, zusätzlich positioniert ihn ein Isolatorflansch 60. Das an dem Anschlussflansch 53 angeformte Rohr 54 ist nur teilweise dargestellt. Der Stutzen 23 ist auf der Innenseite mit einem senkrecht zur Achse 22 angeformten Isolierring 23a versehen, welcher als eine Barriere gegen Lichtbogenüberschläge zwischen dem Sammelschienensystem 2 und der Metallkapselung 24 dient. Durch das trompetenförmige Aufweiten des Stutzens 23 aus isolierendem Material ist der Übergang vom isolierend gekapselten Sammelschienensystem 2 zur Metallkapselung 24 sehr vorteilhaft dielektrisch entlastet.

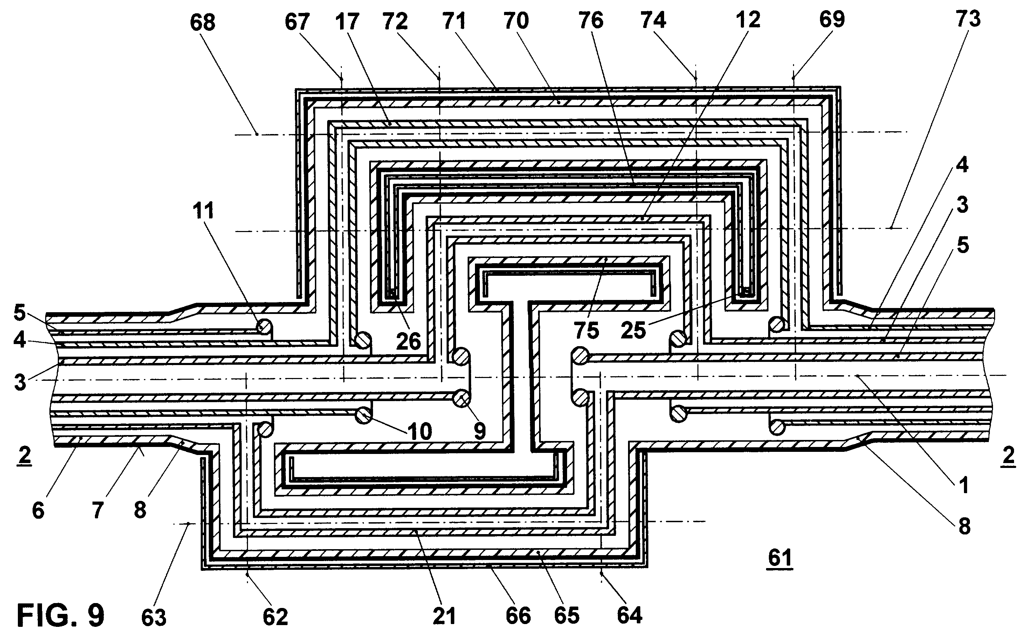

Die Fig.9 zeigt einen Schnitt durch eine Verdrillungsanordnung 61 des erfindungsgemässen Sammelschienensystems 2. Derartige Verdrillungsanordnungen 61 werden im Verlauf des Sammelschienensystems 2 jeweils nach einem Drittel der Gesamtlänge des Sammelschienensystems 2 eingebaut, um eine vorteilhaft gleichmässige Impedanz der Phasenleiter 3,4 und 5 zu erreichen. Bei der gezeigten Verdrillungsanordnung 61 wechselt der links als äusserster ankommende Phasenleiter 5 von aussen auf die innerste Position, der links als mittlerer ankommende Phasenleiter 4 wechselt auf die äusserste Position und der links als innerster ankommende Phasenleiter 3 wechselt auf die mittlere Position des rechts weiterführenden Sammelschienensystems 2.

An das linke Ende des Phasenleiters 5 ist, vorzugsweise rechtwinklig zur zentralen Achse 1, entlang einer Achse 62 erstreckt, ein rohrförmig ausgebildeter Leiter 21 angeschweisst oder angeschraubt. Der Leiter 21 wird dann abgewinkelt, vorzugsweise rechtwinklig, und wird, entlang einer Achse 63 erstreckt, konzentrisch zu dieser Achse 63 weitergeführt. Die Achse 63 verläuft parallel zur zentralen Achse 1. Der Leiter 21 wird dann, in Richtung auf die zentrale Achse 1 zu, nochmals abgewinkelt, vorzugsweise rechtwinklig, und wird, entlang einer Achse 64 erstreckt, konzentrisch zu dieser Achse 64 weitergeführt. Die Achsen 62,63 und 64 liegen in einer Ebene mit der zentralen Achse 1. Der Leiter 21 ist auf der rechten Seite der Verdrillungsanordnung 61 mit dem Phasenleiter 5 verschweisst oder verschraubt, welcher dort die innerste Position des Sammelschienensystems 2 einnimmt. Den Leiter 21 umgibt ein Kapselungsrohr 65 konzentrisch. Das Kapselungsrohr 65 ist aus dem gleichen Isoliermaterial hergestellt wie die Kapselung 6 und ist wie diese mit einer elektrisch leitenden Schicht 7 versehen. Das Kapselungsrohr 65 ist beidseitig druckdicht mit der isolierenden Kapselung 6 verbunden. Der Leiter 21 wird mittels nicht dargestellter Isolierteile, bespielsweise mittels Spiralisolatoren, in dem Kapselungsrohr 65 positioniert. Das Kapselungsrohr 65 wird konzentrisch eingeschlossen von einer rohrförmig ausgebildeten Metallkapselung 66.

An das linke Ende des Phasenleiters 4 ist, vorzugsweise rechtwinklig zur zentralen Achse 1, entlang einer Achse 67 erstreckt, ein rohrförmig ausgebildeter Leiter 17 angeschweisst oder angeschraubt. Der Leiter 17 wird dann abgewinkelt, vorzugsweise rechtwinklig, und wird, entlang einer Achse 68 erstreckt, konzentrisch zu dieser Achse 68 weitergeführt. Die Achse 68 verläuft parallel zur zentralen Achse 1. Der Leiter 17 wird dann, in Richtung auf die zentrale Achse 1 zu, nochmals abgewinkelt, vorzugsweise rechtwinklig, und wird, entlang einer Achse 69 erstreckt, konzentrisch zu dieser Achse 69 weitergeführt. Die Achsen 67,68 und 69 liegen in einer Ebene mit der zentralen Achse 1. Der Leiter 17 ist auf der rechten Seite der Verdrillungsanordnung 61 mit dem Phasenleiter 4 verschweisst oder verschraubt, welcher dort die äusserste Position des Sammelschienensystems 2 einnimmt. Den Leiter 17 umgibt ein Kapselungsrohr 70 konzentrisch. Das Kapselungsrohr 70 ist aus dem gleichen Isoliermaterial hergestellt wie die Kapselung 6 und ist wie diese mit einer elektrisch leitenden Schicht 7 versehen. Das Kapselungsrohr 70 ist beidseitig druckdicht mit der isolierenden Kapselung 6 verbunden. Der Leiter 17 wird mittels nicht dargestellter Isolierteile, bespielsweise mittels Spiralisolatoren, in dem Kapselungsrohr 70 positioniert. Das Kapselungsrohr 70 wird konzentrisch eingeschlossen von einer rohrförmig ausgebildeten Metallkapselung 71.

An das linke Ende des Phasenleiters 3 ist, vorzugsweise rechtwinklig zur zentralen Achse 1, entlang einer Achse 72 erstreckt, ein rohrförmig ausgebildeter Leiter 12 angeschweisst oder angeschraubt. Der Leiter 12 wird dann abgewinkelt, vorzugsweise rechtwinklig, und wird, entlang einer Achse 73 erstreckt, konzentrisch zu dieser Achse 73 weitergeführt. Die Achse 73 verläuft parallel zur zentralen Achse 1. Der Leiter 12 wird dann, in Richtung auf die zentrale Achse 1 zu, nochmals abgewinkelt, vorzugsweise rechtwinklig, und wird, entlang einer Achse 74 erstreckt, konzentrisch zu dieser Achse 74 weitergeführt. Die Achsen 72,73 und 74 liegen in einer Ebene mit der zentralen Achse 1. Der Leiter 12 ist auf der rechten Seite der Verdrillungsanordnung 61 mit dem Phasenleiter 3 verschweisst oder verschraubt, welcher dort die mittlere Position des Sammelschienensystems 2 einnimmt. Den Leiter 12 umgibt ein Kapselungsrohr 75 konzentrisch. Das Kapselungsrohr 75 ist aus dem gleichen Isoliermaterial hergestellt wie die Kapselung 6 und ist wie diese mit einer elektrisch leitenden Schicht 7 versehen. Das Kapselungsrohr 75 ist beidseitig druckdicht mit der isolierenden Kapselung 6 verbunden. Der Leiter 12 wird mittels nicht dargestellter Isolierteile, bespielsweise mittels Spiralisolatoren, in dem Kapselungsrohr 75 positioniert. Das Kapselungsrohr 75 wird konzentrisch eingeschlossen von einer rohrförmig ausgebildeten Metallkapselung 76.

Die rohrförmigen Metallkapselungen 71 und 76 sind durch metallische Stege 25 und 26 elektrisch leitend miteinander verbunden. Die rohrförmige Metallkapselung 66 ist über einen weiteren nicht dargestellten Steg mit den rohrförmigen Metallkapselungen 71 und 76 elektrisch leitend verbunden. Diese Verbindungen sind zudem mit der Erde verbunden.

Die Achsen 62,63 und 64 liegen in einer ersten Ebene mit der zentralen Achse 1, die Achsen 67,68 und 69 liegen in einer zweiten Ebene mit der zentralen Achse 1, die Achsen 72,73 und 74 liegen in einer dritten Ebene mit der zentralen Achse 1. In der Fig.9 liegen alle diese Achsen in einer Ebene. Es ist jedoch durchaus möglich, diese drei Ebenen beliebig räumlich um die zentrale Achse 1 herum anzuordnen.

Zur Erläuterung der Wirkungsweise wird nun zunächst die Fig.1 näher betrachtet. Die konzentrische Anordnung der Phasenleiter 3,4 und 5 hat zur Folge, dass die durch die in diesen Phasenleitern 3,4 und 5 fliessenden Ströme erzeugten elektromagnetischen Felder nicht im Bereich ausserhalb des Phasenleiters 5 wirksam werden können. Diese elektromagnetischen Felder überlagern sich und heben sich gegenseitig auf. Dieser Effekt wirkt sich besonders dort sehr vorteilhaft aus, wo das konzentrisch ausgebildete Sammelschienensystem 2 für besonders hohe Wechselströme vorgesehen ist, beispielsweise bei supraleitenden Generatorableitungen. In diesem Fall können aufwendige metallische Abschirmungen vermieden werden, wie sie bei konventionellen Sammelschienen vorgesehen werden müssen, um beispielsweise ein Ausglühen von Armierungseisen in den Wänden des die Sammelschienen umgebenden Gebäudes zu verhindern. Die elektromagnetischen Felder des erfindungsgemässen Sammelschienensystems 2 verursachen demnach keine unzulässige Belastung der Umgebung des Sammelschienensystems 2.

Die Kapselung 6 braucht demnach nicht aus einem Metallblech gefertigt werden, eine vergleichsweise einfach und preisgünstig zu erstellende Kapselung 6 aus einem Kunststoff genügt den Anforderungen, die an das Sammelschienensystem 2 gestellt werden vollauf. Die vergleichsweise dünne elektrisch leitende Schicht 7 wird mit vergleichsweise geringem Aufwand aussen auf die Kapselung 6 aufgebracht, um in diesem Bereich eindeutig definierte Potentialverhältnisse zu schaffen, sodass sich aussen an dem Sammelschienensystem 2 keine unerwünschten Oberflächenladungen ausbilden können. In der Regel wird dazu die elektrisch leitende Schicht 7 mit der Erde verbunden.

Falls ein Kurzschluss zwischen den drei Phasenleitern 3,4 und 5 auftritt, so brennt der Lichtbogen zwischen diesen drei Phasenleitern 3,4 und 5 und es kann sich kein Lichtbogenfusspunkt auf der Innenseite der Kapselung 6 aus isolierendem Material ausbilden, sodass ein Durchbrennen der isolierenden Kapselung 6 bei diesem Sammelschienensystem 2 nicht möglich ist. Demnach kann mit grosser Sicherheit im Fehlerfall eine Gefährdung des Bedienungspersonals durch Lichtbogeneinwirkung ausgeschlossen werden.

Die konzentrische Anordnung der Phasenleiter 3,4 und 5 hat weiterhin zur Folge, dass sich die beim Auftreten eines Kurzschlusses auftretenden elektrodynamischen Kräfte stets radial nach aussen richten und sich gleichmässig am Umfang der Phasenleiter 3,4 und 5 verteilen, sie wirken also lediglich als vergleichsweise einfach zu beherrschende Druckkräfte. Die rohrförmig ausgebildeten Phasenleiter 3,4 und 5 sind in diesem Fall keinen Biegekräften unterworfen. Die Spiralisolatoren 27, die jeweils zwischen den Phasenleitern 3,4 und 5 und zwischen dem Phasenleiter 5 und der Kapselung 6 angeordnet sind, müssen demnach lediglich das Gewicht der Phasenleiter 3,4 und 5 aufnehmen. Ferner werden durch die beim Auftreten eines Kurzschlusses wirksam werdenden elektrodynamischen Kräfte etwaige Unsymmetrien bei der Zentrierung der Phasenleiter 3,4 und 5 ausgeglichen.

### BEZEICHNUNGSLISTE

- 1: zentrale Achse
- 2: Sammelschienensystem
- 3,4,5: Phasenleiter
- 3a,3b: Enden
- 6: Kapselung
- 7: elektrisch leitende Schicht
- 8: Aufweitung
- 9,10,11: Abschirmring
- 12: Leiter
- 13: Achse
- 14: Stutzen
- 15: Metallkapselung
- 16: Dichtungselement
- 17: Leiter
- 18: Achse
- 19: Stutzen
- 20: Metallkapselung
- 21: Leiter
- 22: Achse
- 23: Stutzen
- 23a: Isolierring
- 24: Metallkapselung
- 25,26: Stege
- 27: Spiralisolator
- 28: Zwischenraum
- 29: Leiterverbindung
- 30: Aussenring
- 31: Innenring
- 32,33: Nuten
- 34,35: Spiralkontakte
- 36,37: Bund
- 38: Schrauben
- 39,40: Nuten
- 41,42: Schrauben
- 43,44,45: Anschlussflansch
- 46,47,48: Schottungsisolator
- 49: Anschlussflansch
- 50: Rohr
- 51: Anschlussflansch
- 52: Rohr
- 53: Anschlussflansch
- 54: Rohr
- 55,56,57: Achse
- 58: Eingussarmatur
- 59: Isolatorkörper
- 60: Isolatorflansch
- 61: Verdrillungsanordnung
- 62,63,64: Achse
- 65: Kapselungsrohr
- 66: Metallkapselung
- 67,68,69: Achse
- 70: Kapselungsrohr
- 71: Metallkapselung
- 72,73,74: Achse
- 75: Kapselungsrohr
- 76: Metallkapselung

## Patentansprüche

1. Sammelschienensystem mit mindestens zwei entlang einer zentral angeordneten Achse (1) erstreckten und konzentrisch zu dieser angeordneten, rohrförmig ausgebildeten Phasenleitern (3,4,5), welche von einer Kapselung (6) konzentrisch umgeben sind, mit zwischen den einzelnen Phasenleitern (3,4,5) und zwischen dem äussersten Phasenleiter (5) und der Kapselung (6) positionierten stützenden Isolierkörpern, wobei die Phasenleiter (3,4,5) mittels einzelnen elektrisch leitenden Leiterverbindungen (29) aus vorgefertigten Teilstücken zusammensetzbar sind, dadurch gekennzeichnet,
- dass die Leiterverbindungen (29) ringförmig ausgebildet sind, und
- dass die Leiterverbindungen (29) mit Mitteln für die Aufnahme von Wärmedehnungen des jeweiligen Phasenleiters (3,4,5) versehen sind.

2. Sammelschienensystem nach Anspruch 1, dadurch gekennzeichnet,
- dass die Leiterverbindungen (29) jeweils mindestens einen Aussenring (30) und mindestens einen Innenring (31) aufweisen, und
- dass die Enden (3a,3b) der zu verbindenden Teilstücke des jeweiligen Phasenleiters (3) zwischen dem Aussenring (30) und dem Innenring (31) gehalten sind.

3. Sammelschienensystem nach Anspruch 2, dadurch gekennzeichnet,
- dass der Aussenring (30) mit gleitenden Stromführungselementen, insbesondere mit Spiralkontakten (34,35), versehen ist, und
- dass der Aussenring (30) und der Innenring (31) starr miteinander verbunden sind.

4. Sammelschienensystem nach einem der Ansprüche 2 oder 3, dadurch gekennzeichnet,
- dass der Aussenring (30) und der Innenring (31) starr und elektrisch leitend mit jeweils dem gleichen der Enden (3a,3b) der zu verbindenden Teilstücke des jeweiligen Phasenleiters (3) verbunden sind.

5. Sammelschienensystem nach einem der Ansprüche 1 bis 4, dadurch gekennzeichnet,
- dass die Kapselung (6) aus Isoliermaterial gefertigt ist, und
- dass die äussere Oberfläche der Kapselung (6) elektrisch leitend oder halbleitend beschichtet ist.

6. Sammelschienensystem nach einem der Ansprüche 1 bis 5, dadurch gekennzeichnet,
- dass als stützende Isolierkörper Spiralisolatoren (27) vorgesehen sind.

7. Sammelschienensystem nach Anspruch 1, dadurch gekennzeichnet,
- dass es mit mindesten zwei Verdrillungsanordnungen (61) versehen ist.

8. Sammelschienensystem nach Anspruch 1, dadurch gekennzeichnet,
- dass Übergänge auf eine ein- oder mehrphasig metallgekapselte gasisolierte Schaltanlage vorgesehen sind.
